# FASCICULE DE BREVET EUROPEEN

(11) **EP 4 184 474 B1**
(45) Date de publication et mention de la délivrance du brevet: **25.02.2026**
(21) Numéro de dépôt: 22208104.4
(22) Date de dépôt: 17.11.2022
(51) Int. Cl.: G08G 1/01, G08G 1/052, G08G 1/0967, G08G 1/16, H04W 4/44, H04W 4/021

(54) **SYSTÈME D ASSISTANCE DE CONDUITE POUR UNE ROUTE ET PROCÉDÉ ASSOCIÉ**
FAHRERASSISTENZSYSTEM FÜR EINE STRASSE UND VERFAHREN DAFÜR
DRIVING ASSISTANCE SYSTEM FOR A ROAD AND METHOD THEREFOR

(30) Priorité: 17.11.2021 FR 2112134
(43) Date de publication de la demande: 24.05.2023
(73) Titulaire: ALSTOM Holdings, 93400 Saint-Ouen-sur-Seine (FR)
(72) Inventeur: POISSON, Pascal, 92330 SCEAUX (FR); COTELLE, Pierre, 69002 LYON (FR)
(74) Mandataire: Plasseraud IP

(56) Documents cités:
- US-A1- 2019 392 712
- US-A1- 2020 228 948
- US-A1- 2021 217 305
- US-B1- 6 411 889

## Description

La présente invention concerne un système d'assistance de conduite pour une route, comprenant une pluralité d'unités de communication le long de la route, chaque unité de communication étant adaptée pour transmettre des données de circulation à des véhicules sur la route dans une zone de communication respective.

La présente invention concerne en outre un procédé d'assistance associé.

Le document US 6 411 889 B1 décrit un système comprenant une pluralité de terminaux de voie.

Chaque terminal présente une portée réduite, de sorte à communiquer qu'avec peu de véhicules. Ainsi, chaque terminal est adapté pour communiquer avec le ou les véhicules les plus proches.

Cependant, un tel système n'est pas adapté pour offrir une assistance de conduite pour une route du fait que chaque terminal ne communique qu'avec un nombre très restreint de véhicules, la portée n'étant pas suffisante.

Le document US 2019/392712 A1 décrit une méthode pour un système d'exploitation et de contrôle de véhicules lourds automatisés, qui facilite l'exploitation et le contrôle des véhicules lourds pour les systèmes d'autoroutes automatisées connectées. Le système de gestion des véhicules lourds fournit aux véhicules lourds des informations personnalisées et des instructions de contrôle du véhicule en temps réel pour accomplir les tâches de conduite telles que le suivi de la voiture, le changement de voie, le guidage routier.

Un objet de l'invention est donc de proposer un système d'assistance de conduite pour une route.

A cet effet, l'invention a pour objet un système du type précité, dans lequel les unités de communication sont agencées le long de la route de sorte que l'ensemble des unités de communication présente une couverture continue comprenant l'ensemble de la route, les données de circulation de chaque unité de communication étant propres à ladite unité de communication, les données de circulation comprenant et/ou étant au moins partiellement déduites d'informations de circulation sur la route détectées.

La couverture continue de l'ensemble des unités de communication permet ainsi de communiquer avec l'ensemble des véhicules sur la route et ainsi de permettre une assistance à la conduite sur l'ensemble de la route.

Le système peut en outre présenter une ou plusieurs des caractéristiques ci-dessous, considérées individuellement ou selon toutes les combinaisons techniquement possibles :
- les unités de communication sont placées le long de la route à intervalle régulier ;
- le système est adapté pour personnaliser les données transmises par les unités de communication, notamment en fonction d'une bande passante disponible du système d'assistance de conduite,
- chaque unité de communication est adaptée pour transmettre les données avec une période correspondant à un intervalle temporel unique donné, l'intervalle temporel unique donné étant commun aux unités de communication, chaque unité de communication étant adaptée pour transmettre les données avec un décalage temporel par rapport à chacune des unités de communication adjacentes,
- chaque unité de communication est adaptée pour transmettre à un véhicule dans la zone de communication de ladite unité de communication des données de circulation relatives à ladite zone de communication,
- les données de circulation transmises par chaque unité de communication comprennent la position, la vitesse et l'accélération de l'ensemble des véhicules de la zone de communication de ladite unité de communication et de la zone de communication respective d'au moins une unité de communication adjacente, plus particulièrement des unités de communication adjacentes, de ladite unité de communication,
- chaque unité de communication est adaptée pour transmettre à un véhicule dans la zone de communication de ladite unité de communication des données de circulation relatives à une zone d'horizon, la zone d'horizon comprenant, ici étant constitué de, la zone de communication de ladite unité de communication et la zone de communication de l'unité de communication précédente de ladite unité de communication par rapport à un sens de circulation et/ou les zones de communication des au moins six unités de communication suivantes de ladite unité de communication par rapport au sens de circulation,
- chaque unité de communication est adaptée pour que les données de circulation transmises à un véhicule dans la zone de communication de ladite unité de communication comprennent des informations générales sur les zones de communication de la zone d'horizon en dehors des unités de communication adjacentes à ladite unité de communication,
- le système comprend des unités de détection d'informations de circulation sur la route, le système d'assistance de conduite étant adapté pour que chaque unité de communication reçoive des données respectives, les données respectives étant et/ou étant déduites des informations de circulation détectées par les unités de détection, et/ou
- les unités de communication sont adaptées pour communiquer avec un véhicule par une connexion sans fil, de type V2X.

L'invention concerne en outre un procédé d'assistance de conduite sur une route , comprenant la fourniture d'un système d'assistance de conduite du type précédent, dans lequel chaque unité de communication présente une portée, chaque emplacement de la route étant compris dans la portée d'au moins une unité de communication, chaque unité de communication transmettant des données de circulation à tout véhicule compatible dans sa portée.

D'autres caractéristiques et avantages de l'invention apparaîtront à la lecture de la description qui suit de modes de réalisation de l'invention, donnée à titre d'exemple uniquement et en référence aux dessins dans lesquels :
[Fig 1] la figure 1 est une vue schématique de haut d'une route équipée d'un système selon un mode de réalisation de l'invention, et

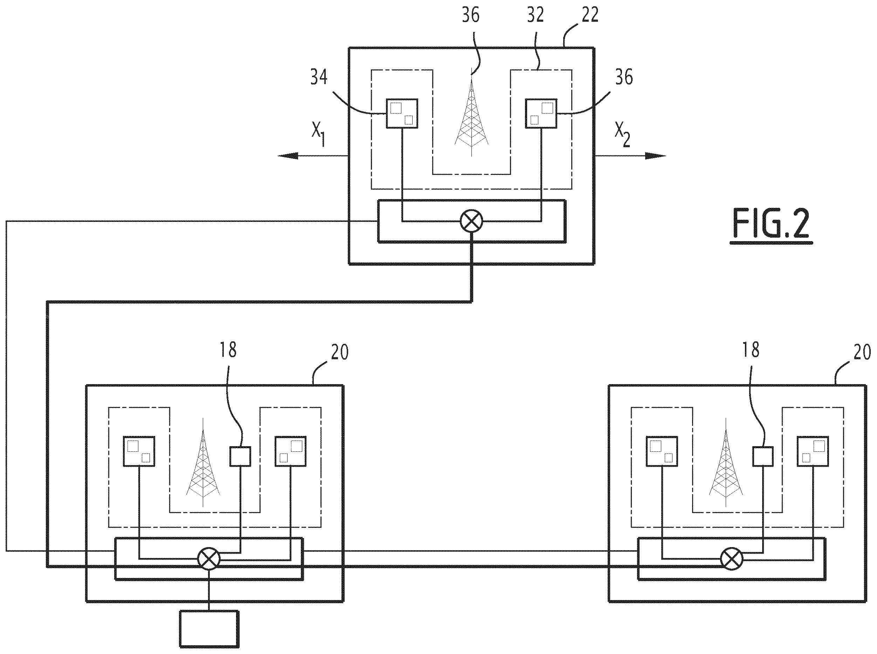

[Fig 2] la figure 2 est une représentation schématique d'un exemple de système selon un mode de réalisation de l'invention.

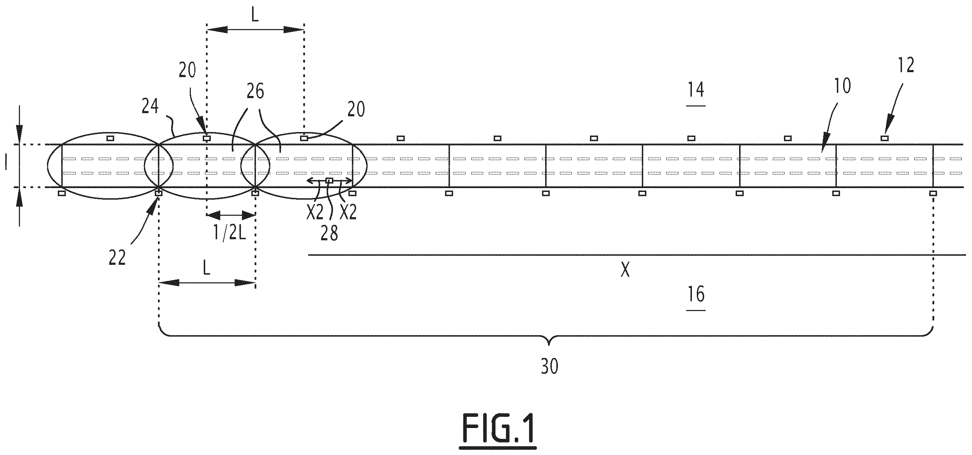

Une portion de route 10 équipée d'un système d'assistance de conduite 12 selon un mode de réalisation de l'invention est représentée schématiquement sur la figure 1. Ladite figure 1 ne montre qu'une portion de la route, et donc de l'installation, qui se répète le long de la route 10.

La route 10 s'étend dans une direction X, la direction présentant deux sens X1, X2.

Les deux sens X1, X2 correspondent aux deux sens de la circulation dans le cas d'une route à double sens ou au sens de circulation et au sens opposé dans le cas d'une route à sens unique de circulation.

On entend par unité(s) adjacente(s) à une unité donnée, la ou les unités encadrant l'unité donnée selon la direction de la route X.

On définit en outre les termes précédente ou suivante comme l'unité adjacente avant ou après l'unité donnée selon un sens X1 ou X2 de circulation. Le sens sélectionné correspond, par exemple, au sens de circulation du véhicule considéré.

La route 10 définit un premier côté 14 et un deuxième côté 16.

Le système d'assistance de conduite 12 comprend une pluralité d'unités de communication 18 le long de la route, plus particulièrement d'un côté de la route, ici du premier côté 14 de la route.

Les unités de communication 18 sont adaptées pour transmettre des données de circulation à des véhicules sur la route 10.

Les unités de communication 18 sont placées le long de la route 10 selon la direction de la route X à un intervalle donné régulier L à une marge d'erreur, par exemple 5%, près.

Le recouvrement est choisi pour garantir la couverture des zones adjacentes pendant un temps minimum donné.

L'intervalle donné régulier L est, par exemple, compris entre 250 m et 400 m.

Plus particulièrement, dans l'exemple représenté, la route 10 est pourvue d'une pluralité d'unités de bord de route 20, 22 agencées le long de la route 10. Certaines unités de bord de route 20 comprennent une unité de communication 18.

Dans l'exemple représenté, certaines unités de bord de route 22 sont dépourvues d'unité de communication 18.

Plus particulièrement, une unité de bord de route sur deux comprend ou ne comprend pas d'unité de communication 18, alternativement le long de la direction de la route X.

Les unités de bord de route 20, 22 sont, plus particulièrement, des unités radios de bord de route.

Les unités de bord de route 20, 22 sont placées alternativement du premier côté 14 et du deuxième côté 16 de la route 10.

Ainsi, chaque unité de bord de route 20, 22, en dehors d'une éventuelle première et/ou dernière unité de bord de route, présente deux unités adjacentes qui sont situées du côté opposé de la route 10 par rapport à ladite unité de bord de route.

Les unités de bord de route 20 comprenant une unité de communication 18 sont agencées d'un même côté 14 de la route et les unités de bord de route 22 dépourvues d'unité de communication sont agencés de l'autre côté 16 de la route.

Les unités de bord de route 20 sont placées le long de la route 10 selon la direction de la route X à un intervalle égal à la moitié de l'intervalle régulier donné L, à une marge d'erreur, par exemple 5%, près.

Les unités de bord de route 20, 22 sont reliées entre elles, par exemple, par un réseau local.

Chaque unité de communication 18 a une portée 24 donnée.

Les unités de communication 18 sont placées le long de la route 10 de sorte que l'ensemble des unités de communication 18 présente une couverture continue sur l'ensemble de la route 10, c'est-à-dire que la route 10 est comprise dans l'union des portées 24 de chaque unité de communication 14.

Plus particulièrement ici, la portée 24 d'une unité de communication 18 comprend le tronçon 26 de la route de longueur l'intervalle régulier donnée L centré sur l'unité de communication 14 selon la direction de la route X, à la marge d'erreur précédente près.

Chaque unité de communication 18 est adaptée pour transmettre des données de circulation à des véhicules au moins sur le tronçon 26, ici sur l'ensemble de la portée 24.

Dans l'exemple représenté, les portées 24 respectives de deux unités de communication 18 adjacentes présentent une intersection non vide. Un véhicule agencé au niveau de l'intersection est susceptible de recevoir des données de chacune des deux unités de communication 18.

Chaque unité de communication 18 est adaptée pour transmettre les données avec une période correspondant à un intervalle temporel unique donné.

L'intervalle temporel unique donné est, par exemple, commun aux unités de communication.

Chaque unité de communication 18 est adaptée pour transmettre les données avec un décalage temporel par rapport à chacune des unités de communication adjacentes.

Cela permet notamment que, pour un véhicule agencé à l'intersection de deux unités de communication, les unités de communication ne transmettent pas les données de circulation au véhicule en même temps.

L'intervalle temporel unique est cohérent par rapport au cycle d'envoi des messages.

Par exemple, le décalage temporel est supérieur ou égal à 50 ms, pour une taille de message et une technologie radio données.

Chaque unité de communication 18 est adaptée pour communiquer avec un ou des véhicules par une connexion sans fil, par exemple par Wi-Fi ou par réseau cellulaire.

La communication est, par exemple, réalisée par technologie V2X, c'est-à-dire par un système de communication véhicule-à-tout.

La communication est, par exemple, réalisée par le standard ITS-G5 et/ou par le standard C-V2X.

La communication par standard ITS-G5 est réalisée par Wi-Fi ( 802.11p et son évolution).

La communication par standard C-V2X est réalisée par le réseau de type 3GPP sur l'interface PC5 .

Les données sont, par exemple, transmises par des messages V2X du type CAM *(Cooperative Awareness messages)* ou DENM *(Dentralized Environmental Notification Message).*

Le ou les véhicules sur la route sont, par exemple, adaptés pour recevoir les données via une connectivité intrinsèque du véhicule ou via un boîtier complémentaire embarqué au sein du véhicule.

Le système d'assistance de conduite est adapté pour personnaliser les données transmises, notamment en fonction d'une bande passante disponible du système d'assistance.

Plus particulièrement, le système d'assistance de conduite est adapté pour personnaliser les données transmises par chaque unité de communication 18 indépendamment, notamment en fonction d'une bande passante disponible de l'unité de communication 18.

L'adaptation permet notamment de gérer un nombre important de véhicules, par exemple en cas de circulation en limite de saturation, c'est-à-dire avec de nombreux véhicules qui se déplacent relativement rapidement.

Les données transmises à un véhicule 28 par une unité de communication 18 comprennent, plus particulièrement correspondent, à des informations relatives à une zone d'horizon 30 de la route.

La zone d'horizon 30 d'une unité de communication 18 comprend ici une zone de communication de ladite unité de communication 18, une zone de communication de l'unité de communication précédente et/ou des zones de communication de plusieurs unités de communication suivantes.

Le nombre d'unités de communication suivantes dans la zone d'horizon est, par exemple, choisir pour couvrir la zone d'horizon souhaitée .

Dans l'exemple décrit, la zone de communication d'une unité de communication 18 correspond au tronçon 26.

La zone d'horizon 30 comprend, ici correspond au, tronçon 26 de la route compris dans la portée 24 de l'unité de communication 18 donnée, le tronçon précédent et une pluralité de tronçons suivants, ici plus particulièrement les six ou sept tronçons suivants.

Les données de circulation transmises par une unité de communication 18 comprennent la position, la vitesse et l'accélération de l'ensemble des véhicules de la zone de communication de ladite unité de communication 18 et des zones de communication des unités de communication adjacentes de ladite unité de communication 18, c'est-à-dire de l'unité de communication précédente et de l'unité de communication suivante.

Les données de circulation transmises par une unité de communication 18 comprennent en outre des informations générales sur le reste de la zone d'horizon 30, en dehors de la zone de communication de ladite unité de communication et des unités de communications adjacentes. Les informations générales comprennent, par exemple, la vitesse moyenne des véhicules, la vitesse minimale et la vitesse maximale des véhicules compris dans des sous-ensembles du reste de la zone d'horizon pour chaque sous-ensemble. Les sous-ensembles sont, par exemple, une portion de chaque voie, ici les tronçons de chaque voie correspondant à chacun des tronçons 26 de la route.

Ainsi, des données précises sur l'ensemble des véhicules proches du véhicule communiquant avec l'unité de communication sont fournies par l'unité de communication au véhicule, mais uniquement des indications générales sur les zones plus lointaines. Cela permet ainsi de fournir des informations utiles pour anticiper un évènement comme un fort ralentissement, sans surcharger un véhicule ou un utilisateur d'informations trop lointaines et sans saturer la bande passante.

Dans un mode de réalisation, les données de circulation transmises par une unité de communication 18 comprennent, par exemple, en outre, la position et la taille d'obstacles éventuels présents sur la route au moins dans la zone d'horizon 30.

Dans un mode de réalisation, les données de circulation transmises par une unité de communication 18 comprennent, par exemple, en outre, des informations de signalisation dynamique présents sur la route au moins dans la zone d'horizon 30, par exemple une éventuelle limitation de vitesse, une éventuelle fermeture de voie, une éventuelle trajectoire spécifique à observer, etc..

Dans l'exemple représenté, chaque unité de bord de route 20, 22 comprend une unité de détection 32 d'informations de circulation sur la route 10.

Chaque unité de détection 32 comprend, par exemple, un premier sous-ensemble 34 détectant des informations depuis l'unité de bord de route 20, 22 dans un premier sens X1 de la route 10 et un deuxième sous-ensemble 36 détectant des informations depuis l'unité de bord de route 20, 22 dans le deuxième sens X2 de la route.

Le système d'assistance 12 est adapté pour que chaque unité de communication 18 reçoive des données respectives, les données respectives étant et/ou étant déduites des informations de circulation détectées par les unités de détection 32.

Les données transmises par chaque unité de communication découlent, au moins partiellement, des données reçues.

Une scène virtuelle est, par exemple, reconstruite à partir des informations de circulation détectées par les unités de détection 32.

Cela permet par exemple de palier à une éventuelle occultation d'une ou d'unités de détection et/ou d'une erreur à un emplacement, en visualisant la circulation virtuellement.

Alternativement, les unités de détection 32 sont agencées séparément des unités de bord de route 20 comprenant les unités de communication 18.

Alternativement, les données transmises par les unités de communication 18 ne sont pas obtenues par des unités de détection d'informations de circulation sur la route agencées dans les unités de bord de route 20, 22. Les données sont, par exemple, fournies par un centre général de contrôle.

Chaque unité de bord de route 20, 22 comprend ici, en outre, une antenne 36 pour communiquer avec, par exemple, un système central (non représenté).

Un exemple de procédé d'assistance de conduite sur une route va maintenant être décrit en regard du système précédemment décrit.

Le procédé comprend la fourniture d'un système d'assistance tel que décrit précédemment.

Chaque unité de communication présente une portée, chaque emplacement de la route étant compris dans la portée d'au moins une unité de communication, comme mis en avant précédemment.

Chaque unité de communication transmet des données de circulation à tout véhicule compatible dans sa portée.

La transmission a lieu avec une période correspondant à l'intervalle temporel unique donné.

Avantageusement, chaque unité de communication transmet les données avec un décalage temporel par rapport à chacune des unités de communication adjacentes.

Les données de circulation transmises sont, par exemple, adaptées comme décrit précédemment.

Le ou les véhicules sur la route sont, par exemple, adaptés pour recevoir les données via une connectivité intrinsèque du véhicule ou via un boîtier complémentaire embarqué au sein du véhicule.

Les données transmises par chaque unité de communication découlent, au moins partiellement, de données reçues.

Les données reçues sont ou sont déduites des informations de circulation détectées par les unités de détection 32 dans une des variantes décrites précédemment.

Additionnellement ou alternativement, chaque unité de communication est susceptible de recevoir des données additionnelles, par exemple d'un centre général de contrôle.

Un système d'assistance de conduite selon l'invention couvre l'ensemble de la route et est donc adapté pour transmettre des informations à l'ensemble des véhicules présents sur la route.

Cela permet notamment à un conducteur de connaître des données qui peuvent être utiles à la conduite et/ou de fournir des informations utiles à un véhicule dans un mode de délégation de conduite.

## Revendications

1. Système d'assistance de conduite (12) pour une route (10), comprenant une pluralité d'unités de communication (18) le long de la route (10), chaque unité de communication (18) étant adaptée pour transmettre des données de circulation à des véhicules (28) sur la route (10) dans une zone de communication respective (26),
dans lequel
- les unités de communication (18) sont agencées le long de la route (10) de sorte que l'ensemble des unités de communication (18) présente une couverture continue comprenant l'ensemble de la route (10),
- chaque unité de communication (18) étant adaptée pour transmettre à un véhicule (28) dans la zone de communication (26) de ladite unité de communication (18) des données de circulation relatives à une zone d'horizon,
- la zone d'horizon comprenant la zone de communication (26) de ladite unité de communication (18) et la zone de communication de l'unité de communication précédente de ladite unité de communication par rapport à un sens de circulation et les zones de communication des au moins six unités de communication suivantes de ladite unité de communication par rapport au sens de circulation,
- les données de circulation de chaque unité de communication (18) étant propres à ladite unité de communication (18), les données de circulation comprenant et/ou étant au moins partiellement déduites d'informations de circulation détectées sur la route (10),
- les données de circulation de chaque unité de communication (18) comprenant en outre des informations de circulation générales sur les zones de communication (26) de la zone d'horizon en dehors des unités de communication adjacentes à ladite unité de communication (18).

2. Système d'assistance de conduite (12) selon la revendication 1, dans lequel les unités de communication (18) sont placées le long de la route à intervalle régulier (L).

3. Système d'assistance de conduite (12) selon la revendication 1 ou 2, adapté pour personnaliser les données transmises par les unités de communication (18), notamment en fonction d'une bande passante disponible du système d'assistance de conduite (12).

4. Système d'assistance de conduite (12) selon l'une quelconque des revendications 1 à 3, dans lequel chaque unité de communication (18) est adaptée pour transmettre les données avec une période correspondant à un intervalle temporel unique donné, l'intervalle temporel unique donné étant commun aux unités de communication (18), chaque unité de communication (18) étant adaptée pour transmettre les données avec un décalage temporel par rapport à chacune des unités de communication adjacentes.

5. Système d'assistance de conduite (12) selon l'une quelconque des revendications 1 à 4, dans lequel les données de circulation transmises par chaque unité de communication (18) comprennent la position, la vitesse et l'accélération de l'ensemble des véhicules (28) de la zone de communication (26) de ladite unité de communication (18) et de la zone de communication respective d'au moins une unité de communication adjacente, plus particulièrement des unités de communication adjacentes, de ladite unité de communication (18).

6. Système d'assistance de conduite (12) selon l'une quelconque des revendications 1 à 5, comprenant des unités de détection (32) d'informations de circulation sur la route (10), le système d'assistance de conduite (12) étant adapté pour que chaque unité de communication (18) reçoive des données respectives, les données respectives étant et/ou étant déduites des informations de circulation détectées par les unités de détection (32).

7. Système d'assistance de conduite (12) selon l'une quelconque des revendications 1 à 6, dans lequel les unités de communication (18) sont adaptées pour communiquer avec un véhicule (28) par une connexion sans fil, de type V2X.

8. Système d'assistance de conduite (12) selon l'une quelconque des revendications 1 à 7, dans lequel les informations de circulation générales comprennent : la vitesse moyenne des véhicules et/ou la vitesse minimale et/ou la vitesse maximale des véhicules compris dans des sous-ensembles de la zone d'horizon.

9. Système d'assistance de conduite (12) selon l'une quelconque des revendications 1 à 8, dans lequel les informations de circulation générales comprennent la position et la taille d'obstacles éventuels présents sur la route au moins dans la zone d'horizon (30).

10. Système d'assistance de conduite (12) selon l'une quelconque des revendications 1 à 9, dans lequel les informations de circulation générales comprennent des informations de signalisation dynamique présents sur la route au moins dans la zone d'horizon (30).

11. Procédé d'assistance de conduite sur une route (10), comprenant la fourniture d'un système d'assistance de conduite (12) selon l'une quelconque des revendications 1 à 10, dans lequel chaque unité de communication (18) présente une portée (24), chaque emplacement de la route (10) étant compris dans la portée (24) d'au moins une unité de communication (18), chaque unité de communication (18) transmettant des données de circulation relatives à une zone d'horizon à tout véhicule compatible dans sa portée (24), la zone d'horizon comprenant la zone de communication (26) de ladite unité de communication (18) et la zone de communication de l'unité de communication précédente de ladite unité de communication par rapport à un sens de circulation et les zones de communication des au moins six unités de communication suivantes de ladite unité de communication par rapport au sens de circulation, les données de circulation transmises par l'unité de communication (18) comprenant des informations générales sur les zones de communication (26) de la zone d'horizon en dehors des unités de communication adjacentes à ladite unité de communication (18).

## Patentansprüche

1. Fahrassistenzsystem (12) für eine Straße (10), umfassend eine Mehrzahl von Kommunikationseinheiten (18) entlang der Straße (10), wobei jede Kommunikationseinheit (18) dazu ausgebildet ist, Verkehrsdaten an Fahrzeuge (28) auf der Straße (10) in einem jeweiligen Kommunikationsbereich (26) zu übertragen, wobei
- die Kommunikationseinheiten (18) entlang der Straße (10) so angeordnet sind, dass die Gesamtheit der Kommunikationseinheiten (18) eine kontinuierliche Abdeckung der gesamten Straße (10) bietet,
- jede Kommunikationseinheit (18) dazu ausgebildet ist, einem Fahrzeug (28) im Kommunikationsbereich (26) dieser Kommunikationseinheit (18) Verkehrsdaten zu einem Horizontbereich zu übermitteln,
- wobei der Horizontbereich den Kommunikationsbereich (26) der Kommunikationseinheit (18) und den Kommunikationsbereich der der genannten Kommunikationseinheit in Fahrtrichtung vorangehenden Kommunikationseinheit sowie die Kommunikationsbereiche der mindestens sechs der genannten Kommunikationseinheit in Fahrtrichtung nachfolgenden Kommunikationseinheiten umfasst,
- wobei die Verkehrsdaten jeder Kommunikationseinheit (18) für die Kommunikationseinheit (18) spezifisch sind, wobei die Verkehrsdaten Verkehrsinformationen umfassen und/oder zumindest teilweise aus Verkehrsinformationen abgeleitet sind, die auf der Straße (10) erfasst wurden,
- wobei die Verkehrsdaten jeder Kommunikationseinheit (18) ferner allgemeine Verkehrsinformationen über die Kommunikationsbereiche (26) des Horizontbereichs außerhalb der an die Kommunikationseinheit (18) angrenzenden Kommunikationseinheiten umfassen.

2. Fahrassistenzsystem (12) nach Anspruch 1, wobei die Kommunikationseinheiten (18) in regelmäßigen Abständen (L) entlang der Straße angeordnet sind.

3. Fahrassistenzsystem (12) nach Anspruch 1 oder 2, das dazu ausgebildet ist, die von den Kommunikationseinheiten (18) übertragenen Daten insbesondere in Abhängigkeit von einer verfügbaren Bandbreite des Fahrassistenzsystems (12) anzupassen.

4. Fahrassistenzsystem (12) nach einem der Ansprüche 1 bis 3, wobei jede Kommunikationseinheit (18) dazu ausgebildet ist, die Daten mit einer Periode zu übertragen, die einem vorgegebenen Zeitintervall entspricht, wobei das vorgegebene Zeitintervall den Kommunikationseinheiten (18) gemeinsam ist, wobei jede Kommunikationseinheit (18) dazu ausgebildet ist, die Daten mit einer Zeitverschiebung bezüglich jeder der benachbarten Kommunikationseinheiten zu übertragen.

5. Fahrassistenzsystem (12) nach einem der Ansprüche 1 bis 4, wobei die von jeder Kommunikationseinheit (18) übertragenen Verkehrsdaten die Position, Geschwindigkeit und Beschleunigung aller Fahrzeuge (28) in dem Kommunikationsbereich (26) der Kommunikationseinheit (18) und in dem jeweiligen Kommunikationsbereich mindestens einer benachbarten Kommunikationseinheit, insbesondere benachbarter Kommunikationseinheiten, der Kommunikationseinheit (18) umfassen.

6. Fahrassistenzsystem (12) nach einem der Ansprüche 1 bis 5, umfassend Erfassungseinheiten (32) für Verkehrsinformationen auf der Straße (10), wobei das Fahrassistenzsystem (12) so ausgebildet ist, dass jede Kommunikationseinheit (18) jeweilige Daten empfängt, wobei die jeweiligen Daten die von den Erfassungseinheiten (32) erfassten Verkehrsinformationen sind und/oder aus diesen abgeleitet werden.

7. Fahrassistenzsystem (12) nach einem der Ansprüche 1 bis 6, wobei die Kommunikationseinheiten (18) dazu ausgebildet sind, mit einem Fahrzeug (28) über eine drahtlose Verbindung vom Typ V2X zu kommunizieren.

8. Fahrassistenzsystem (12) nach einem der Ansprüche 1 bis 7, wobei die allgemeinen Verkehrsinformationen Folgendes umfassen: die Durchschnittsgeschwindigkeit der Fahrzeuge und/oder die Mindestgeschwindigkeit und/oder die Höchstgeschwindigkeit der Fahrzeuge, die in Teilmengen des Horizontbereichs enthalten sind.

9. Fahrassistenzsystem (12) nach einem der Ansprüche 1 bis 8, wobei die allgemeinen Verkehrsinformationen die Position und Größe von möglichen Hindernissen umfassen, die zumindest im Horizontbereich (30) auf der Straße vorhanden sind.

10. Fahrassistenzsystem (12) nach einem der Ansprüche 1 bis 9, wobei die allgemeinen Verkehrsinformationen dynamische Verkehrszeicheninformationen umfassen, die auf der Straße zumindest im Horizontbereich (30) vorhanden sind.

11. Verfahren zur Fahrassistenz auf einer Straße (10), umfassend die Bereitstellung eines Fahrassistenzsystems (12) nach einem der Ansprüche 1 bis 10, wobei jede Kommunikationseinheit (18) eine Reichweite (24) aufweist, wobei jeder Ort auf der Straße (10) innerhalb der Reichweite (24) mindestens einer Kommunikationseinheit (18) liegt, jede Kommunikationseinheit (18) Verkehrsdaten bezüglich eines Horizontbereichs an jedes kompatible Fahrzeug innerhalb ihrer Reichweite (24) überträgt, wobei der Horizontbereich den Kommunikationsbereich (26) der genannten Kommunikationseinheit (18) und den Kommunikationsbereich der der genannten Kommunikationseinheit bezüglich einer Verkehrsrichtung vorangehenden Kommunikationseinheit umfasst, wobei die Kommunikationsbereiche der mindestens sechs bezüglich der Verkehrsrichtung nachfolgenden Kommunikationseinheiten, die von der Kommunikationseinheit (18) übertragenen Verkehrsdaten allgemeine Informationen über die Kommunikationsbereiche (26) des Horizontbereichs außerhalb der an die Kommunikationseinheit (18) angrenzenden Kommunikationseinheiten umfassen.

## Claims

1. A driving assistance system (12) for a road (10), comprising a plurality of communication units (18) along the road (10), each communication unit (18) being adapted to transmit traffic data to vehicles (28) on the road (10) in a respective communication zone (26), wherein
- the communication units (18) are arranged along the route (10) such that the set of communication units (18) has a continuous coverage comprising the whole road (10),
- each communication unit (18) being adapted to transmit traffic data relating to a horizon zone to a vehicle (28) in the communication zone (26) of said communication unit (18),
- the horizon zone comprising the communication zone (26) of said communication unit (18) and the communication zone of the preceding communication unit of said communication unit relative to a traffic direction and the communication zones of the at least six subsequent communication units of said communication unit relative to the traffic direction,
- the traffic data of each communication unit (18) being specific to said communication unit (18), the traffic data comprising and/or being at least partially deduced from traffic information detected on the road (10),
- the traffic data of each communication unit (18) further comprising general traffic information on the communication zones (26) of the horizon zone outside the communication units adjacent to said communication unit (18).

2. The driving assistance system (12) according to claim 1, wherein the communication units (18) are placed along the road at regular intervals (L).

3. The driving assistance system (12) according to claim 1 or 2, adapted to personalise the data transmitted by the communication units (18), in particular according to an available bandwidth of the driving assistance system (12).

4. The driving assistance system (12) according to any one of claims 1 to 3, wherein each communication unit (18) is adapted to transmit the data with a period corresponding to a given single time interval, the given single time interval being common to the communication units (18), each communication unit (18) being adapted to transmit the data with a time offset relative to each of the adjacent communication units.

5. The driving assistance system (12) according to any one of claims 1 to 4, wherein the traffic data transmitted by each communication unit (18) comprises the position, speed and acceleration of the set of vehicles (28) of the communication zone (26) of said communication unit (18) and of the respective communication zone of at least one adjacent communication unit, more particularly adjacent communication units, of said communication unit (18).

6. The driving assistance system (12) according to any one of claims 1 to 5, comprising units (32) for detecting traffic information on the road (10), the driving assistance system (12) being adapted so that each communication unit (18) receives respective data, the respective data being and/or being deduced from the traffic information detected by the detection units (32).

7. The driving assistance system (12) according to any one of claims 1 to 6, wherein the communication units (18) are adapted to communicate with a vehicle (28) via a V2X type wireless connection.

8. The driving assistance system (12) according to any one of claims 1 to 7, wherein the general traffic information comprises: the average speed of the vehicles and/or the minimum speed and/or the maximum speed of the vehicles comprised in subsets of the horizon zone.

9. The driving assistance system (12) according to any one of claims 1 to 8, wherein the general traffic information comprises the position and size of any obstacles present on the road at least in the horizon zone (30).

10. The driving assistance system (12) according to any one of claims 1 to 9, wherein the general traffic information comprises dynamic signalling information present on the road at least in the horizon zone (30).

11. A driving assistance method on a road (10), comprising providing a driving assistance system (12) according to any one of claims 1 to 10, wherein each communication unit (18) has a range (24), each location of the road (10) being comprised in the range (24) of at least one communication unit (18), each communication unit (18) transmitting traffic data relating to a horizon zone to any compatible vehicle within its range (24), the horizon zone comprising the communication zone (26) of said communication unit (18) and the communication zone of the preceding communication unit of said communication unit relative to a traffic direction and the communication zones of the at least six subsequent communication units of said communication unit relative to the traffic direction, the traffic data transmitted by the communication unit (18) comprising general information about the communication zones (26) of the horizon zone outside the communication units adjacent to said communication unit (18).
